# EUROPÄISCHE PATENTSCHRIFT

(11) **EP 3 356 769 B1**
(45) Veröffentlichungstag und Bekanntmachung des Hinweises auf die Patenterteilung: **19.06.2019**
(21) Anmeldenummer: 16745465.1
(22) Anmeldetag: 01.08.2016
(51) Int. Cl.: G01D 11/24, B29C 45/02, B29C 45/03, B29C 45/14

(54) **VERFAHREN ZUM HERSTELLEN EINER SENSORANORDNUNG FÜR EIN GETRIEBESTEUERGERÄT**
METHOD FOR PRODUCING A SENSOR ASSEMBLY FOR A TRANSMISSION CONTROL UNIT
PROCÉDÉ DE FABRICATION D'UN ENSEMBLE CAPTEUR POUR UN CALCULATEUR DE BOÎTE DE VITESSES

(30) Priorität: 01.10.2015 DE 102015219004
(43) Veröffentlichungstag der Anmeldung: 08.08.2018
(73) Patentinhaber: Robert Bosch GmbH, 70442 Stuttgart (DE)
(72) Erfinder: LISKOW, Uwe, 71679 Asperg (DE)
(86) Internationale Anmeldenummer: PCT/EP2016/068275
(87) Internationale Veröffentlichungsnummer: WO 2017/054960

(56) Entgegenhaltungen:
- DE-A1-102004 011 100
- DE-A1-102008 064 047
- DE-A1-102009 008 457
- DE-A1-102014 202 182

## Beschreibung

### Gebiet der Erfindung

Die Erfindung betrifft allgemein ein Verfahren zum Herstellen einer Sensoranordnung. Insbesondere betrifft die Erfindung ein Verfahren zum Herstellen einer Sensoranordnung für ein Getriebesteuergerät eines Kraftfahrzeugs.

### Stand der Technik

Die Sensorelemente in Elektronikmodulen für Getriebesteuergeräte können insbesondere zur Bestimmung einer Drehzahl und/oder zur Bestimmung von Wegen bzw. Positionen in einem Getriebe ausgeführt sein. Beispielsweise können derartige Sensorelemente als Hallsensoren ausgeführt sein, etwa in Form eines integrierten Schaltkreises (bzw. eines "Integrated Circuits", IC) und/oder in Form einer anwendungsspezifischen integrierten Schaltung (bzw. "Application-Specific Integrated Circuit", ASIC).

Die Sensorelemente können an Sensordomen angebracht und einzeln in dem Getriebe und/oder einem Motor eines Kraftfahrzeugs verbaut werden. Alternativ können die Sensordome in die Elektronikmodule integriert und elektrisch mit Komponenten des Elektronikmoduls kontaktiert werden. Derartige Getriebesteuermodule können wiederum in dem Getriebe verbaut werden und direkt dem heißen und aggressiven Getriebefluid ausgesetzt sein, so dass ein umfassender Schutz der Sensorelemente erforderlich sein kann.

Zum Schutz gegen Getriebefluid werden die Sensorelemente häufig auf Leiterplatten der Elektronikmodule gelötet und mit einem Lack oder einer Vergussmasse überzogen. Auch werden die Sensorelemente häufig in Stanzgitter gelötet und/oder geschweißt und mit Vergussmasse umspritzt, welche z.B. durch Wärmezufuhr ausgehärtet werden kann. Auch können die Sensorelemente auf Leiterfolien gelötet, mit undichten Deckelementen gegen Partikel geschützt, mit Vergussmasse umspritzt sowie an ein Zwischenstanzgitter zur Weiterkontaktierung geschweißt werden.

Alternativ kann ein Haltekörper an ein Zwischenstanzgitter angespritzt werden, das Sensorelement kann in den Haltekörper gelegt und mit Duroplast umspritzt werden, wobei das Zwischenstanzgitter zur Haftungsoptimierung an der Duroplastmasse häufig versilbert ist. Da Silber in Getriebefluid unter Umständen keinen ausreichenden Korrosionsschutz bieten kann, wird das Zwischenstanzgitter meist mit einem umspritzten Kabel oder mit einem weiteren umspritzten Stanzgitter verbunden. Diese Baugruppe wird dann häufig mit einer Zweitumspritzung umhüllt, aus welcher ein nochmal umspritztes Kabel oder Stanzgitter ragt, welches dann mit weiteren Komponenten des Elektronikmoduls verbunden werden kann.

Dokumente DE 10 2008 064047 A1, DE 10 2009 008457 A1 und DE 10 2014 202182 A1 zeigen eine Sensoranordnung mit einem Leiterrahmen, Dokument DE 10 2004 011100 A1 weist einen Kunststoffgrundbaustein auf.

Die EP 1 239 710 A2 offenbart eine elektronische Baugruppe, bei welcher ein Sensorelement durch Schweißen mit einer Leiterfolie elektrisch leitend verbunden ist.

### Offenbarung der Erfindung

### Vorteile der Erfindung

Ausführungsformen der vorliegenden Erfindung können in vorteilhafter Weise ermöglichen, eine robuste und zuverlässige Sensoranordnung in einem kostengünstigen und vereinfachten Prozess herzustellen.

Gemäß einem Aspekt der Erfindung wird ein Verfahren zum Herstellen einer Sensoranordnung für ein Getriebesteuergerät eines Kraftfahrzeugs vorgeschlagen. Das Verfahren weist die folgenden Schritte auf: Einbringen einer Ausnehmung in eine Leiterfolie, welche eine Mehrzahl von zwischen einer Basisschicht und einer Deckschicht aufgenommenen Leiterbahnen aufweist, Anordnen eines Sensorelements, welches wenigstens zwei von einem Sensorkörper abragende Kontaktelemente aufweist, in der Ausnehmung der Leiterfolie, so dass die Leiterfolie den Sensorkörper entlang eines Außenumfangs zumindest teilweise, insbesondere vollständig, umläuft und/oder umschließt, Kontaktieren und Verbinden der Kontaktelemente des Sensorelements mit jeweils einer der Leiterbahnen der Leiterfolie, und Umspritzen des Sensorelements und eines an die Ausnehmung angrenzenden Teilbereichs der Leiterfolie mit einer Vergussmasse, so dass das Sensorelement zumindest an einem Außenumfang vollständig von der Vergussmasse umschlossen und die Vergussmasse formschlüssig an der Leiterfolie gehalten ist. Weiter weist das Verfahren die Schritte des zumindest teilweisen Aushärtens und/oder Vernetzens der Vergussmasse, des Anordnens der Leiterfolie und des Sensorelements an einem Grundkörper der Sensoranordnung, und des Fixierens der Leiterfolie an dem Grundkörper auf. Das Verfahren zeichnet sich insbesondere dadurch aus, dass das Sensorelement und der an die Ausnehmung angrenzende Teilbereich mit Vergussmasse umspritzt werden und die Vergussmasse zumindest teilweise ausgehärtet wird bevor die Leiterfolie und das mit Vergussmasse umspritzte Sensorelement an dem Grundkörper angeordnet werden.

Das Sensorelement und der an die Ausnehmung angrenzende Teilbereich der Leiterfolie können dabei derart umspritzt sein, dass an zwei sich bezüglich einer Ebene, in welcher sich die Leiterfolie erstreckt, gegenüberliegenden Seiten der Leiterfolie jeweils eine Schicht von Vergussmasse angeordnet ist. Derart kann sichergestellt sein, dass die das Sensorelement zumindest teilweise umhüllende Vergussmasse formschlüssig an der Leiterfolie gehalten und/oder fixiert ist. Die Vergussmasse kann zudem auch stoffschlüssig an der Leiterfolie gehalten. Die Ebene, in welcher sich die Leiterfolie erstreckt kann hier und im Folgenden als "Ebene der Leiterfolie" bezeichnet werden.

Das erfindungsgemäße Verfahren kann in vorteilhafter Weise eine Herstellung der Sensoranordnung vereinfachen und Herstellungskosten reduzieren. Auch kann durch das erfindungsgemäße Verfahren ein für einen umfassenden Schutz des Sensorelements benötigtes Material, insbesondere teure Werkstoffe wie Kupfer und Zinn, sowie ein Gewicht der Sensoranordnung reduziert werden. Auch kann das Verfahren eine einfache und kostengünstige Variantenbildung ermöglichen. Weiter kann das Verfahren eine Vorkonfektionierung in Standardprozessen sowie eine vereinfachte Schlussmontage, etwa in einer Modulherstellung für Getriebesteuermodule, erlauben.

Weiter kann mit dem Verfahren eine Sensoranordnung mit einem verbesserten Schutz gegen z.B. durch Späne, leitende Ablagerungen und/oder leitende Medien in einem Getriebefluid hervorgerufenen Kurz- und Nebenschlüsse bereitgestellt werden. Weiter kann bei der erfindungsgemäß hergestellten Sensoranordnung eine Positioniergenauigkeit und eine Funktion verbessert sein, beispielsweise da ein Luftspalt zwischen dem Sensorelement, welcher etwa einen Hallsensor aufweisen kann, und einem zu sensierenden Element erhöht werden kann. Bei der erfindungsgemäß hergestellten Sensoranordnung können ferner potentielle Eintrittsstellen für Getriebefluid in die Sensoranordnung bzw. das Sensorelement, wie etwa Eintrittsbereiche der Kontaktelemente in den Sensorkörper, sowie Kontaktstellen zwischen den Kontaktelementen und den Leiterbahnen der Leiterfolie in einem vereinfachten Herstellungsprozess dauerhaft, kostengünstig, zuverlässig und umfassend geschützt werden.

Gemäß einer Ausführungsform der Erfindung umfasst der Schritt des Anordnens des Sensorelements in der Ausnehmung der Leiterfolie einen Schritt des Positionierens des Sensorkörpers in der Ausnehmung umfasst, wobei der Sensorkörper derart in der Ausnehmung positioniert wird, dass sich eine, z.B. quer zum Außenumfang des Sensorkörpers erstreckende, Außenfläche des Sensorkörpers in einer Ebene erstreckt, in welcher sich die Leiterfolie erstreckt. Zur Herstellung kann das Sensorelement und die Leiterfolie beispielsweise an einem Werkzeug anliegen und einseitig mit Vergussmasse umspritzt werden.

Gemäß einer Ausführungsform der Erfindung wird das Sensorelement derart umspritzt, dass eine Außenfläche des Sensorkörpers näher an einer Oberfläche der Vergussmasse angeordnet ist als eine gegenüberliegende weitere Außenfläche des Sensorkörpers an einer gegenüberliegenden weiteren Oberfläche der Vergussmasse. Mit anderen Worten kann das Sensorelement derart umspritzt werden, dass es dezentral bzw. nicht mittig in dem Volumen der Vergussmasse angeordnet ist. Die Außenfläche des Sensorkörpers kann näher an derjenigen Oberfläche der Vergussmasse angeordnet sein, welche näher an der Ebene der Leiterfolie liegt als die gegenüberliegende Oberfläche der Vergussmasse. Alternativ kann die weitere Außenfläche des Sensorkörpers näher an derjenigen weiteren Oberfläche der Vergussmasse angeordnet sein, welche weiter entfernt von der Ebene der Leiterfolie ist als die gegenüberliegende Oberfläche der Vergussmasse. Die jeweilige Außenfläche des Sensorkörpers kann ferner nahezu oder vollständig bündig mit einer der Oberflächen der Vergussmasse abschließen. Es kann jedoch auch eine zumindest dünne Schicht von Vergussmasse an der jeweiligen Außenfläche angeordnet sein kann, um einen umfassenden Schutz des Sensorelements bereitzustellen und etwa einen Formschluss der Vergussmasse an der Leiterfolie zu verbessern.

Gemäß einer Ausführungsform der Erfindung umfasst der Schritt des Anordnens des Sensorelements in der Ausnehmung der Leiterfolie einen Schritt des Positionierens des Sensorkörpers in der Ausnehmung, wobei der Sensorkörper derart in der Ausnehmung positioniert wird, dass zwei sich gegenüberliegende, parallele Sensorebenen, in welchen sich jeweils eine Außenfläche des Sensorkörpers erstreckt, eine Ebene, in welcher sich die Leiterfolie erstreckt, einschließen. Mit anderen Worten kann der Sensorkörper derart in der Ausnehmung der Leiterfolie positioniert werden, dass zwei sich bezüglich der Ebene der Leiterfolie gegenüberliegende Außenflächen des Sensorkörpers aus der Ebene der Leiterfolie herausragen.

Gemäß einer Ausführungsform der Erfindung wird das Sensorelement derart umspritzt, dass das Sensorelement vollständig von Vergussmasse umschlossen und oder umhüllt ist. Auf diese Weise können potentielle Eintrittsstellen für Getriebefluid vermieden werden und ein umfassender Schutz gegen Getriebefluid kann für das Sensorelement bereitgestellt sein.

Gemäß einer Ausführungsform der Erfindung werden die Leiterfolie und das Sensorelement derart auf dem Grundkörper angeordnet, dass zwischen dem Sensorkörper und dem Grundkörper Vergussmasse angeordnet ist. Mit anderen Worten kann zwischen dem Grundkörper und dem Sensorelement eine Schicht von Vergussmasse vorgesehen sein, so dass zum einen ein umfassender Schutz des Sensorelements gewährleistet und zum anderen eine formschlüssige Fixierung der Vergussmasse an der Leiterfolie sichergestellt sein kann.

Gemäß einer Ausführungsform der Erfindung weist die Vergussmasse ein Duroplastmaterial, ein Thermoplastmaterial, ein epoxidharzbasiertes Material, ein silikonhaltiges Material, ein polyurethanbasiertes Material und/oder ein acrylbasiertes Material, wie z.B. einen Acrylklebstoff. Derartige Materialien können sich durch eine hohe Medienbeständigkeit gegen Getriebefluid auszeichnen.

Gemäß einer Ausführungsform der Erfindung wird die Vergussmasse durch Wärmezufuhr und/oder durch UV-Licht-Bestrahlung ausgehärtet und/oder vernetzt. Derart kann eine Aushärtezeit der Vergussmasse in vorteilhafter Weise reduziert sein.

Gemäß einer Ausführungsform der Erfindung wird die Leiterfolie mittels Warmverstemmung und/oder mittels einer Klebverbindung auf dem Grundkörper fixiert. Dies kann eine robuste und kostengünstige Befestigung der Leiterfolie sowie des mit Vergussmasse zumindest teilweise umhüllten Sensorelements auf dem Grundkörper erlauben.

Gemäß einer Ausführungsform der Erfindung weist das Verfahren weiter den Schritt des Einbringens einer weiteren Ausnehmung in einen Bereich der Leiterfolie, welcher zwischen zwei benachbarten Leiterbahnen angeordnet ist, welche mit jeweils einem der Kontaktelemente des Sensorelements kontaktiert und/oder verbunden werden, auf, wobei die weitere Ausnehmung zumindest teilweise, insbesondere vollständig, mit Vergussmasse ausgespritzt wird. Der Bereich der Leiterfolie kann dabei zwischen zwei direkt benachbarten Leiterbahnen angeordnet sein. Durch die weitere Ausnehmung sowie die Ausspritzung derselben mit Vergussmasse kann eine Barriere zwischen den Kontaktstellen der Kontaktelemente mit den Leiterbahnen ausgebildet sein, so dass Kurz- und Nebenschlüsse zwischen den Kontaktstellen vermieden werden können. Auch kann dadurch eine formschlüssige Fixierung der Vergussmasse auf der Leiterfolie verbessert sein.

### Kurze Beschreibung der Zeichnungen

Nachfolgend werden Ausführungsformen der Erfindung unter Bezugnahme auf die beigefügten Zeichnungen beschrieben, wobei weder die Zeichnungen noch die Beschreibung als die Erfindung einschränkend auszulegen sind.
Fig. 1 zeigt einen Schnitt durch eine nach dem erfindungsgemäßen Verfahren hergestellte Sensoranordnung.
Fig. 2 zeigt ein Flussdiagramm zur Illustration von Schritten des Verfahrens zum Herstellen einer Sensoranordnung gemäß einer Ausführungsform der Erfindung.
Fig. 3A bis 5 zeigen jeweils einen Teil einer Sensoranordnung zur Illustration von Prozessschritten des Herstellungsverfahrens gemäß Ausführungsformen der Erfindung.

Die Figuren sind lediglich schematisch und nicht maßstabsgetreu. Gleiche Bezugszeichen bezeichnen in den Figuren gleiche oder gleichwirkende Merkmale.

### Ausführungsformen der Erfindung

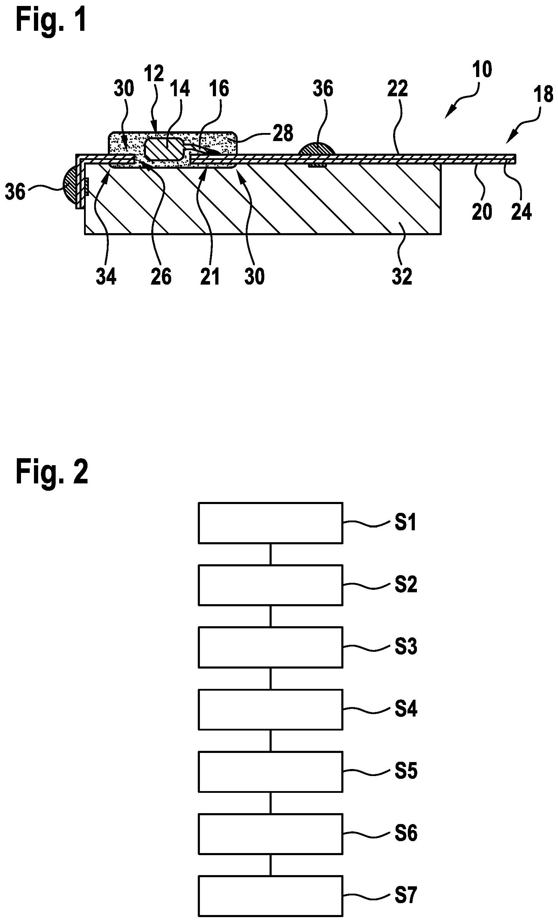

Fig. 1 zeigt einen Schnitt durch eine nach dem erfindungsgemäßen Verfahren hergestellte Sensoranordnung 10 für ein Getriebesteuergerät eines Kraftfahrzeugs.

Die Sensoranordnung 10 weist ein als integrierter Schaltkreis ("integrated circuit", IC) ausgeführtes Sensorelement 12 auf. Das Sensorelement 12 kann auch ein anwendungsspezifischer integrierter Schaltkreis, ein sogenannter ASIC ("application-specific integrated circuit"), sein. Insbesondere kann das Sensorelement 12 einen Hall-Sensor zur Bestimmung einer Drehzahl und/oder zur Bestimmung von Wegen bzw. Positionen in einem Getriebe eines Kraftfahrzeuges aufweisen.

Das Sensorelement 12 weist dabei einen Sensorkörper 14 auf, welcher den z.B. mit Duroplast und/oder Thermoplast umspritzten elektronischen Schaltkreis aufweist. Von dem Sensorkörper 14 ragen ferner wenigstens zwei Kontaktelemente 16 ab. Die Kontaktelemente 16 können etwa Anschlussdrähte des Sensorelements 12 bezeichnen. Die Kontaktelemente 16 können aus Kupfer bestehen und/oder z.B. versilbert und/oder verzinnt sein.

Weiter weist die Sensoranordnung 10 eine Leiterfolie 18 mit zwischen einer Basisschicht 20 und einer Deckschicht 22 angeordneten und/oder aufgenommenen Leiterbahnen 24 auf. Die Basisschicht 20 und die Deckschicht 22 können beispielsweise aus Polyamid und/oder Polyamidimid gefertigt sein und die Leiterbahnen 24, welche beispielsweise aus Kupfer bestehen können, mediendicht umschließen.

Die Kontaktelemente 16 des Sensorelements 12 sind jeweils mit einer der Leiterbahnen 24 der Leiterfolie 18 elektrisch leitfähig verbunden. Beispielsweise können die Kontaktelemente 24 jeweils mit einer Leiterbahn 24 verschweißt und/oder verlötet sein, etwa mittels Bügellöten und/oder Lichtlöten. Zum Kontaktieren und/oder Verbinden der Kontaktelemente 16 mit den Leiterbahnen 24 kann in die Deckschicht 22 eine Ausnehmung 21 bzw. Öffnung 21 eingebracht, so dass die Kontaktelemente 16 zumindest teilweise über die Ausnehmung 21 durch die Deckschicht 22 hindurch ragen und mit jeweils einer Leiterbahn 24 elektrisch leitfähig verbunden werden können. Die Leiterfolie 18 kann auch umgedreht werden und es kann eine entsprechende Ausnehmung 21 in die Basisschicht 20 eingebracht sein.

Weiter weist die Leiterfolie 18 eine Ausnehmung 26 auf, in welcher der Sensorkörper 14 des Sensorelements 12 zumindest teilweise aufgenommen ist. Die Leiterfolie 18 umläuft den Sensorkörper 14 dabei entlang eines Außenumfangs zumindest teilweise, insbesondere vollständig.

Zum Schutz gegen Getriebefluid sind das Sensorelement 12 sowie Kontaktstellen zwischen den Kontaktelementen 16 und den Leiterbahnen 24 zumindest teilweise, insbesondere vollständig, mit einer Vergussmasse 28 umspritzt bzw. in die Vergussmasse 28 eingebettet. Die Vergussmasse 28 kann ein Duroplastmaterial, ein Thermoplastmaterial, ein epoxidharzbasiertes Material, ein silikonhaltiges Material, ein polyurethanbasiertes Material und/oder ein acrylbasiertes Material aufweisen. Die Vergussmasse 28 kann dabei eine Umhüllung des Sensorelements 12 bereitstellen. Die Kontaktelemente 16 können dabei ebenfalls zumindest teilweise, insbesondere vollständig, mit Vergussmasse 28 umspritzt sein.

Ferner ist ein an die Ausnehmung 26 angrenzender Teilbereich 30 der Leiterfolie 18 mit der Vergussmasse 28 umspritzt. Der Teilbereich 30 kann dabei einen Bereich der Leiterfolie 18 bezeichnen, welcher den Sensorkörper zumindest teilweise, insbesondere vollständig, entlang des Außenumfangs des Sensorkörpers 14 umläuft. Der Teilbereich 30 der Leiterfolie 18 kann dabei derart mit Vergussmasse 28 umspritzt, dass an zwei sich bezüglich der Ebene der Leiterfolie 18 gegenüberliegenden Seiten der Leiterfolie 18 Vergussmasse 28 angeordnet ist. Auf diese Weise kann sichergestellt sein, dass die Vergussmasse 28 mit dem darin eingebetteten Sensorelement 12 formschlüssig über die Ausnehmung 26 an der Leiterfolie 18 gehalten ist. Je nach Material der Vergussmasse 28 kann diese auch stoffschlüssig an der Leiterfolie 18 gehalten und/oder fixiert sein.

Weiter weist die Sensoranordnung 10 einen Grundkörper 32 auf, auf welchem die Vergussmasse 28 mit Sensorelement 12 sowie die Leiterfolie 18 angeordnet ist. Das Sensorelement 12 ist dabei derart in der Vergussmasse 28 eingebettet, dass zwischen Grundkörper 32 und Sensorkörper 14 bzw. Sensorelement 12 eine Schicht von Vergussmasse 28 angeordnet ist. Gleichsam ist das Sensorelement 12 über die Vergussmasse 28 auf dem Grundkörper 32 abgestützt. Der Grundkörper 32 kann etwa aus Kunststoff, Thermoplast, Duroplast und/oder aus einem beliebigen anderen Material gefertigt sein. Der Grundkörper 32 kann eine Trage- bzw. Haltestruktur für die Leiterfolie 18 und das Sensorelement 12 bilden und/oder bereitstellen. Dazu kann der Grundkörper 32 eine Vertiefung 34 bzw. Ausnehmung 34 aufweisen, in welcher zumindest ein Teil der Vergussmasse 28 zur zumindest teilweisen Fixierung angeordnet sein kann.

Die Leiterfolie 18 ist ferner mittels Warmverstemmung, etwa mittels Warmverstemmnieten 36, an dem Grundkörper 32 befestigt und/oder fixiert. Alternativ oder zusätzlich kann die Leiterfolie 18 und/oder die Vergussmasse 28 über eine Klebverbindung an dem Grundkörper 32 fixiert sein.

Voranstehend beschriebene Merkmale und Elemente könne Teil des erfindungsgemäßen Verfahrens zum Herstellen der Sensoranordnung 10 sein, so wie obenstehend und untenstehend beschrieben.

Fig. 2 zeigt ein Flussdiagramm zur Illustration von Schritten eines Verfahrens zum Herstellen einer Sensoranordnung 10 gemäß einer Ausführungsform der Erfindung.

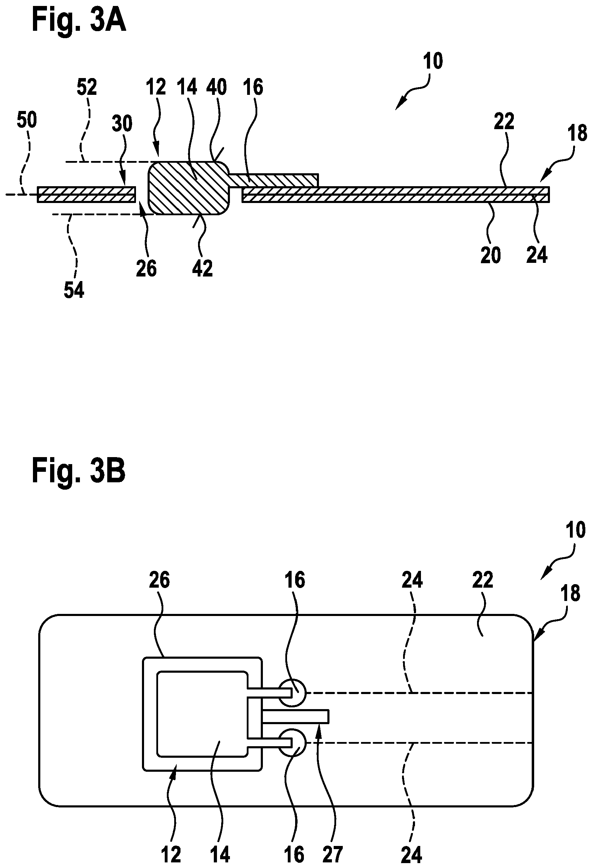

In einem Schritt S1 wird die Ausnehmung 26 in die Leiterfolie 18 eingebracht. Auch kann zur Vermeidung von Kurz- und Nebenschlüssen zwischen den Kontaktelementen 16 in dem Schritt S1 eine weitere Ausnehmung 27 (siehe Fig. 3B) in einen Bereich der Leiterfolie 18 eingebracht werden, welcher zwischen zwei benachbarten Leiterbahnen 24 und/oder zwischen den beiden Kontaktelementen 16 angeordnet ist.

In einem weiteren Schritt S2 wird das Sensorelement 12 in der Ausnehmung 26 der Leiterfolie 18 angeordnet bzw. in diese eingebracht, so dass die Leiterfolie 18 den Sensorkörper 14 entlang eines Außenumfangs zumindest teilweise umläuft.

In einem weiteren Schritt S3 werden die Kontaktelemente 16 des Sensorelements 12 mit jeweils einer der Leiterbahnen 24 der Leiterfolie 18 elektrisch kontaktiert und verbunden. Beispielsweise können die Kontaktelemente 16 mit den Leiterbahnen 24 verlötet und/oder verschweißt werden. Insbesondere können die Kontaktelemente 16 mittels Bügellöten und/oder Lichtlöten mit den Leiterbahnen 24 in Schritt S3 kontaktiert und verbunden werden.

In einem weiteren Schritt S4 wird das Sensorelement 12 und der an die Ausnehmung 26 angrenzenden Teilbereich 30 der Leiterfolie 18 mit der Vergussmasse 28 umspritzt, so dass das Sensorelement 12 zumindest an einem Außenumfang vollständig von der Vergussmasse 28 umschlossen und formschlüssig an der Leiterfolie 18 gehalten ist.

In einem weiteren Schritt S5 wird die Vergussmasse 28 zumindest teilweise ausgehärtet und/oder vernetzt. Die Vergussmasse 28 kann auch vollständig ausgehärtet werden. Die Verugussmasse 28 kann in Schritt S5 etwa durch Wärmezufuhr und/oder UV-Lichtbestrahlung ausgehärtet werden.

In einem weiteren Schritt S6 wird die Leiterfolie 18 und das mit Vergussmasse 28 umspritzte Sensorelement 12 auf bzw. an dem Grundkörper 32 der Sensoranordnung 10 angeordnet und/oder positioniert. Beispielsweise kann die Vergussmasse 28 mit Sensorelement 12 in die Vertiefung 34 des Grundkörpers 32 eingelegt werden.

In einem weiteren Schritt S7 wird die Leiterfolie 18 an dem Grundkörper 32 fixiert und/oder befestigt, beispielsweise mittels Warmverstemmung der Warmverstemmnieten 36 und/oder mittels einer Klebverbindung.

Erfindungsgemäß werden die Schritte S4 und S5 vor dem Schritt S6 ausgeführt.

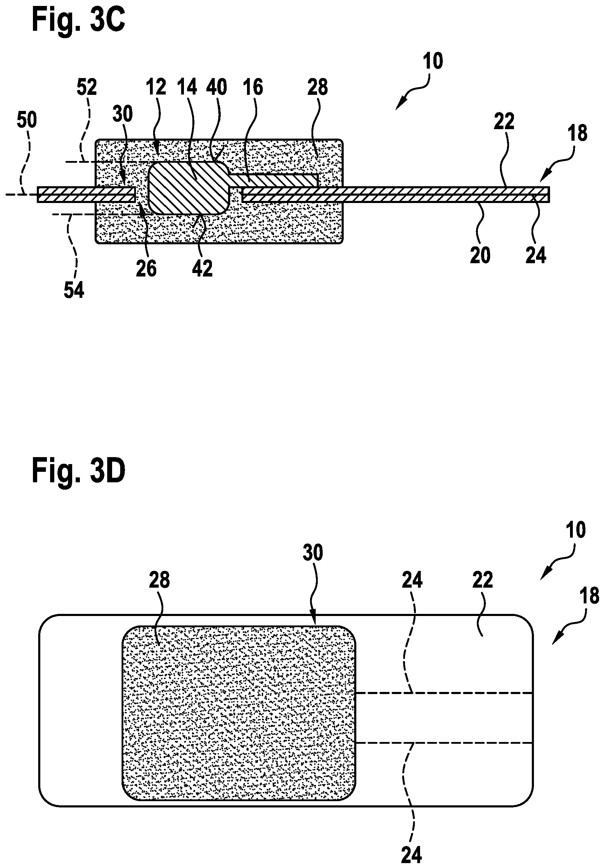

Fig. 3A bis 3B zeigen jeweils einen Teil einer Sensoranordnung 10 zur Illustration von Prozessschritten des Herstellungsverfahrens gemäß einer Ausführungsform der Erfindung. Dabei zeigt Fig. 3A einen Schnitt durch ein Sensorelement 12 mit Leiterfolie 18 und Fig. 3B zeigt eine entsprechende Draufsicht. Fig. 3C zeigt einen Schnitt durch ein mit Vergussmasse 28 umspritztes Sensorelement 12 mit Leiterfolie 18 und Fig. 3C zeigt eine entsprechende Draufsicht.

Zur Herstellung der in Fig. 3A bis 3C gezeigten Ausführungsbeispiele wird das Sensorelement 12, beispielsweise in Schritt S2 der Fig. 2, im Wesentlichen mittig zu einer Ebene 50, in welcher sich die Leiterfolie erstreckt, positioniert, wie in Fig. 3A ersichtlich. Die Ebene 50 kann dabei durch die Mitte der Leiterfolie 18, durch eine Außenflächen der Basisschicht 20 oder durch eine Außenfläche der Deckschicht 22 der Leiterfolie 18 definiert sein. Dabei wird die Ebene 50 von zwei sich gegenüberliegenden Sensorebenen 52, 54 und/oder von zwei sich gegenüberliegenden Außenflächen 40, 42 des Sensorkörpers 14 eingeschlossen. Die Sensorebenen 52, 54 bezeichnen dabei Ebenen, in welchen sich jeweils eine der Außenflächen 40, 42 des Sensorkörpers 14 erstreckt. Die Außenflächen 40, 42 liegen sich dabei bezüglich der Leiterfolie 18 bzw. der Ebene 50 der Leiterfolie 18 gegenüber und ragen jeweils von der Leiterfolie 18 ab. Die beiden Außenflächen 40, 42 weisen Normalenvektoren auf, welche im Wesentlichen orthogonal zur Leiterfolie 18 gerichtet sind.

In der Draufsicht der Fig. 3B ist ferner die weitere Ausnehmung 27 zwischen den beiden Kontaktelementen 16 sichtbar. Die Ausnehmung 27 kann dabei mit der Ausnehmung 26 verbunden sein oder durch Material der Leiterfolie 18 von der Ausnehmung 26 angesetzt und/oder getrennt sein.

Wie in Fig. 3C erkennbar ist, kann das Sensorelement 12 quer, insbesondere orthogonal, zur Ebene 50 im Wesentlichen mittig bzw. zentral in der Vergussmasse 28 aufgenommen sein. Die Anordnung der Fig. 3C kann beispielsweise in ein Moldwerkzeug und/oder eine Spritzgießmaschine eingelegt und mit Vergussmasse 28 umspritzt werden.

Wie in Fig. 3D erkennbar ist, kann die Vergussmasse 28 bzw. der Teilbereich 30 der Leiterfolie 18, welcher mit Vergussmasse 28 umspritzt ist an den Rand der Leiterfolie 18 angrenzen.

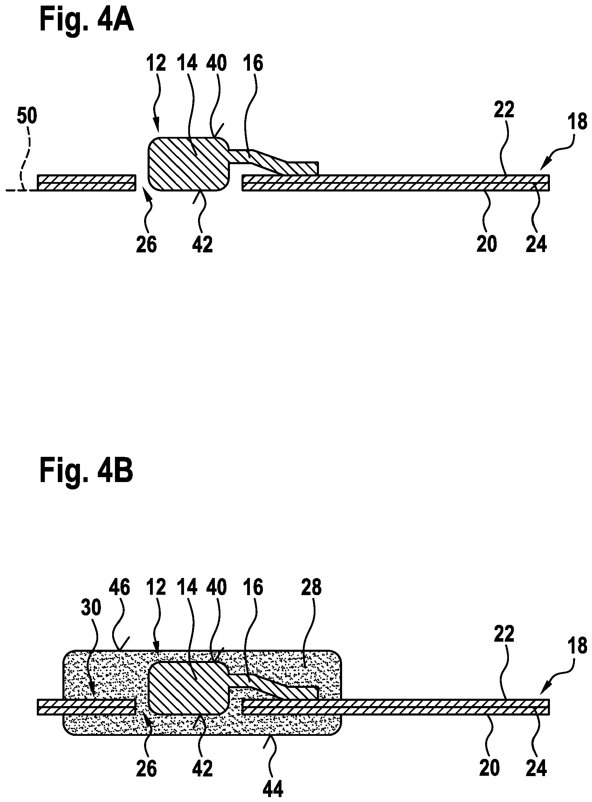

Fig. 4A und 4B zeigen jeweils einen Teil einer Sensoranordnung 10 zur Illustration von Prozessschritten des Herstellungsverfahrens gemäß einer Ausführungsform der Erfindung. Dabei zeigt Fig. 4A einen Schnitt durch ein Sensorelement 12 mit Leiterfolie 18 und Fig. 4B einen Schnitt durch das mit Vergussmasse 28 umspritze Sensorelement 12 mit Leiterfolie 18 der Fig. 4A.

Bei dem in Fig. 4A und 4B gezeigten Ausführungsbeispiel ist das Sensorelement 12, beispielsweise in Schritt S2 der Fig. 2, derart in der Ausnehmung 26 der Leiterfolie 18 positioniert, dass sich die Außenfläche 42 des Sensorkörpers in der Ebene 50 erstreckt, wobei die Ebene 50 in diesem Fall diejenige Ebene bezeichnet, in welcher sich die Außenfläche der Basisschicht 20 der Leiterfolie 18 erstreckt. Mit anderen Worten kann die Außenfläche 42 des Sensorkörpers auf selber Höhe liegen wie die Außenfläche der Basisschicht 20. Dazu kann die Leiterfolie 18 mit in der Ausnehmung 28 angeordnetem Sensorelement 12 in ein Werkzeug, etwa ein Moldwerkzeug und/oder eine Spritzgießmaschine, eingelegt und mit Vergussmasse 28 vollständig umspritzt werden.

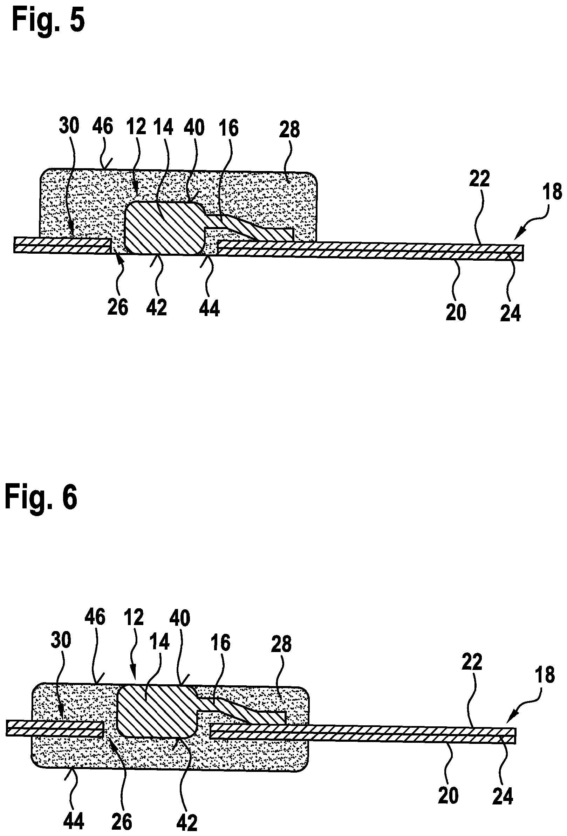

Fig. 5 zeigt einen Teil einer Sensoranordnung 10 zur Illustration von Prozessschritten des Herstellungsverfahrens gemäß einer Ausführungsform der Erfindung. In Fig. 5 ist ein Schnitt durch ein mit Vergussmasse 28 umspritzes Sensorelement 12 mit Leiterfolie 18 gezeigt.

Während der Herstellung kann die Leiterfolie 18 mit in der Ausnehmung 28 angeordnetem Sensorelement 12 mit der Außenfläche 42 flächig an einem Werkzeug anliegen und von der gegenüberliegenden Seite mit Vergussmasse 28 umspritzt werden. Entsprechend kann die Außenfläche 42 des Sensorelements 12 frei von Vergussmasse 28 sein und im Wesentlichen bündig mit einer Oberfläche 44 der Vergussmasse 28 abschließen. Es kann jedoch auch eine dünne Schicht Vergussmasse 28 an der Außenfläche 26 ausgebildet sein, um das Sensorelement 12 umfassend zu schützen und den Formschluss der Vergussmasse 28 an der Leiterfolie 18 zu verbessern. Bei dem Ausführungsbeispiel der Fig. 5 ist die Außenfläche 42 jedenfalls näher an der Oberfläche 44 der Vergussmasse 28 angeordnet als die gegenüberliegende Außenfläche 40 an der gegenüberliegend zur Oberfläche 44 angeordnete Oberfläche 46 der Vergussmasse 28.

Fig. 6 zeigt einen Teil einer Sensoranordnung 10 zur Illustration von Prozessschritten des Herstellungsverfahrens gemäß einer Ausführungsform der Erfindung. In Fig. 6 ist ein Schnitt durch ein mit Vergussmasse 28 umspritzes Sensorelement 12 mit Leiterfolie 18 gezeigt.

Im Gegensatz zu dem Ausführungsbeispiel der Fig. 5 schließt bei dem Ausführungsbeispiel der Fig. 6 die Außenfläche 40 des Sensorkörpers 14 im Wesentlichen bündig mit der Oberfläche 46 der Vergussmasse 28 ab. Die Außenfläche 40 kann auch mit einer dünnen Schicht Vergussmasse 28 bedeckt sein. Die Außenfläche 40 des Sensorkörpers 14 ist jedenfalls näher an der Oberfläche 46 der Vergussmasse 28 angeordnet als die Außenfläche 42 an der Oberfläche 44 der Vergussmasse 28.

Abschließend ist darauf hinzuweisen, dass Begriffe wie "aufweisend", "umfassend", etc. keine anderen Elemente oder Schritte ausschließen und Begriffe wie "eine" oder "ein" keine Vielzahl ausschließen. Bezugszeichen in den Ansprüchen sind nicht als Einschränkung anzusehen.

## Patentansprüche

1. Verfahren zum Herstellen einer Sensoranordnung (10) für ein Getriebesteuergerät eines Kraftfahrzeugs, das Verfahren aufweisend die Schritte:
Einbringen einer Ausnehmung (26) in eine Leiterfolie (18), welche eine Mehrzahl von zwischen einer Basisschicht (20) und einer Deckschicht (22) aufgenommenen Leiterbahnen (24) aufweist;
Anordnen eines Sensorelements (12), welches wenigstens zwei von einem Sensorkörper (14) abragende Kontaktelemente (16) aufweist, in der Ausnehmung (26) der Leiterfolie (18), so dass die Leiterfolie (18) den Sensorkörper (14) entlang eines Außenumfangs zumindest teilweise umläuft;
Kontaktieren und Verbinden der Kontaktelemente (16) des Sensorelements (12) mit jeweils einer der Leiterbahnen (24) der Leiterfolie (18);
Umspritzen des Sensorelements (12) und eines an die Ausnehmung (26) angrenzenden Teilbereichs (30) der Leiterfolie (18) mit einer Vergussmasse (28), so dass das Sensorelement (12) zumindest an einem Außenumfang vollständig von der Vergussmasse (28) umschlossen und die Vergussmasse (28) formschlüssig an der Leiterfolie (18) gehalten ist;
zumindest teilweises Aushärten der Vergussmasse (28);
Anordnen der Leiterfolie (18) und des Sensorelements (12) an einem Grundkörper (32) der Sensoranordnung (10); und
Fixieren der Leiterfolie (18) an dem Grundkörper (32),
**dadurch gekennzeichnet, dass**
das Sensorelement (12) und der an die Ausnehmung (26) angrenzende Teilbereich (30) mit Vergussmasse (28) umspritzt werden und die Vergussmasse (28) zumindest teilweise ausgehärtet wird bevor die Leiterfolie (18) und das mit Vergussmasse (28) umspritzte Sensorelement (12) an dem Grundkörper (32) angeordnet werden.

2. Verfahren nach Anspruch 1,
wobei der Schritt des Anordnens des Sensorelements (12) in der Ausnehmung (26) der Leiterfolie (18) einen Schritt des Positionierens des Sensorkörpers (14) in der Ausnehmung (26) umfasst,
wobei der Sensorkörper (14) derart in der Ausnehmung (26) positioniert wird, dass sich eine Außenfläche (42) des Sensorkörpers (14) in einer Ebene (50) erstreckt, in welcher sich die Leiterfolie (18) erstreckt.

3. Verfahren nach Anspruch 1 oder 2,
wobei das Sensorelement (12) derart umspritzt wird, dass eine Außenfläche (40, 42) des Sensorkörpers (14) näher an einer Oberfläche (44, 46) der Vergussmasse (28) angeordnet ist als eine gegenüberliegende weitere Außenfläche (40, 42) des Sensorkörpers (14) an einer gegenüberliegenden weiteren Oberfläche (44, 46) der Vergussmasse.

4. Verfahren nach Anspruch 1,
wobei der Schritt des Anordnens des Sensorelements (12) in der Ausnehmung (26) der Leiterfolie (18) einen Schritt des Positionierens des Sensorkörpers (14) in der Ausnehmung umfasst,
wobei der Sensorkörper (14) derart in der Ausnehmung (26) positioniert wird, dass zwei sich gegenüberliegende, parallele Sensorebenen (52, 54), in welchen sich jeweils eine Außenfläche (40, 42) des Sensorkörpers (14) erstreckt, eine Ebene (50), in welcher sich die Leiterfolie (18) erstreckt, einschließen.

5. Verfahren nach einem der voranstehenden Ansprüche,
wobei das Sensorelement (12) derart umspritzt wird, dass das Sensorelement (12) vollständig von Vergussmasse (28) umschlossen ist.

6. Verfahren nach einem der voranstehenden Ansprüche,
wobei die Leiterfolie (18) und das Sensorelement (12) derart auf dem Grundkörper (32) angeordnet werden, dass zwischen dem Sensorkörper (14) und dem Grundkörper (32) Vergussmasse (28) angeordnet ist.

7. Verfahren nach einem der voranstehenden Ansprüche,
wobei die Vergussmasse (28) ein Duroplastmaterial, ein Thermoplastmaterial, ein epoxidharzbasiertes Material, ein silikonhaltiges Material, ein polyurethanbasiertes Material und/oder ein acrylbasiertes Material aufweist.

8. Verfahren nach einem der voranstehenden Ansprüche,
wobei die Vergussmasse (28) durch Wärmezufuhr und/oder durch UV-Licht-Bestrahlung ausgehärtet wird.

9. Verfahren nach einem der voranstehenden Ansprüche,
wobei die Leiterfolie (18) mittels Warmverstemmung und/oder mittels einer Klebverbindung auf dem Grundkörper (32) fixiert wird.

10. Verfahren nach einem der voranstehenden Ansprüche, weiter aufweisend:
Einbringen einer weiteren Ausnehmung (27) in einen Bereich der Leiterfolie (18), welcher zwischen zwei benachbarten Leiterbahnen (24) angeordnet ist, welche mit jeweils einem der Kontaktelemente (16) des Sensorelements (12) kontaktiert werden, und
wobei die weitere Ausnehmung (26) zumindest teilweise mit Vergussmasse (28) ausgespritzt wird.

## Claims

1. Method for producing a sensor arrangement (10) for a gearbox controller of a motor vehicle, the method comprising the steps of:
making a recess (26) in a conductor foil (18) which has a plurality of conductor tracks (24) which are accommodated between a base layer (20) and a top layer (22) ;
arranging a sensor element (12), which has at least two contact elements (16) which protrude from a sensor body (14), in the recess (26) of the conductor foil (18), so that the conductor foil (18) at least partially encircles the sensor body (14) along an outer circumference, contacting and connecting the contact elements (16) of the sensor element (12) to in each case one of the conductor tracks (24) of the conductor foil (18);
encapsulating the sensor element (12) and a subregion (30) of the conductor foil (18), which subregion adjoins the recess (26), by injection moulding with a potting compound (28), so that the sensor element (12) is completely enclosed by the potting compound (28) at least over an outer circumference and the potting compound (28) is held in an interlocking manner on the conductor foil (18) ;
at least partially curing the potting compound (28);
arranging the conductor foil (18) and the sensor element (12) on a main body (32) of the sensor arrangement (10); and
fixing the conductor foil (18) to the main body (32),
**characterized in that**
the sensor element (12) and the subregion (30) which adjoins the recess (26) are encapsulated by injection moulding with potting compound (28) and the potting compound (28) is at least partially cured before the conductor foil (18) and the sensor element (12) which is encapsulated by injection moulding with potting compound (28) are arranged on the main body (32).

2. Method according to Claim 1,
wherein the step of arranging the sensor element (12) in the recess (26) of the conductor foil (18) comprises a step of positioning the sensor body (14) in the recess (26),
wherein the sensor body (14) is positioned in the recess (26) in such a way that an outer surface (42) of the sensor body (14) extends in a plane (50) in which the conductor foil (18) extends.

3. Method according to Claim 1 or 2,
wherein the sensor element (12) is encapsulated by injection moulding in such a way that an outer surface (40, 42) of the sensor body (14) is arranged closer to a surface (44, 46) of the potting compound (28) than an opposite further outer face (40, 42) of the sensor body (14) on an opposite further surface (44, 46) of the potting compound.

4. Method according to Claim 1,
wherein the step of arranging the sensor element (12) in the recess (26) of the conductor foil (18) comprises a step of positioning the sensor body (14) in the recess, wherein the sensor body (14) is positioned in the recess (26) in such a way that two opposite, parallel sensor planes (52, 54), in which in each case one outer surface (40, 42) of the sensor body (14) extends, includes a plane (50) in which the conductor foil (18) extends.

5. Method according to one of the preceding claims,
wherein the sensor element (12) is encapsulated by injection moulding in such a way that the sensor element (12) is completely enclosed by potting compound (28).

6. Method according to one of the preceding claims, wherein the conductor foil (18) and the sensor element (12) are arranged on the main body (32) in such a way that potting compound (28) is arranged between the sensor body (14) and the main body (32).

7. Method according to one of the preceding claims, wherein the potting compound (28) comprises a thermosetting material, a thermoplastic material, an epoxy resin-based material, a silicone-containing material, a polyurethane-based material and/or an acrylic-based material.

8. Method according to one of the preceding claims, wherein the potting compound (28) is cured by application of heat and/or irradiation with UV light.

9. Method according to one of the preceding claims, wherein the conductor foil (18) is fixed on the main body (32) by means of hot-caulking and/or by means of adhesive bonding.

10. Method according to one of the preceding claims, further comprising:
making a further recess (27) in a region of the conductor foil (18) which is arranged between two adjacent conductor tracks (24) which are contacted by in each case one of the contact elements (16) of the sensor element (12), and
wherein the further recess (26) is at least partially filled with potting compound (28) by injection moulding.

## Revendications

1. Procédé de fabrication d'un ensemble capteur (10) destiné à un calculateur de boîte de vitesses d'un véhicule automobile, le procédé comprenant les étapes consistant à :
ménager un évidement (26) dans un film conducteur (18) présentant une pluralité de pistes conductrices (24) reçues entre une couche de base (20) et une couche supérieure (22) ;
agencer un élément capteur (12), qui comporte au moins deux éléments de contact (16) dépassant d'un corps de capteur (14), dans l'évidement (26) du film conducteur (18), de manière à ce que le film conducteur (18) enveloppe au moins partiellement le corps de capteur (14) le long d'une périphérie extérieure ;
mettre en contact et connecter les éléments de contact (16) de l'élément capteur (12) avec l'une des pistes conductrices (24) respectives du film conducteur (18) ;
enrober par injection l'élément capteur (12) et une région partielle (30), adjacente à l'évidement (26), du film conducteur (18) avec une masse de coulée (28), de manière à ce que l'élément capteur (12) soit entièrement entouré par la masse de coulée (28) au moins sur une périphérie extérieure et à ce que la masse de coulée (28) soit maintenue par complémentarité de forme sur le film conducteur (18) ;
durcir au moins partiellement la masse de coulée (28) ;
agencer le film conducteur (18) et l'élément capteur (12) sur un corps de base (32) de l'ensemble capteur (10) ; et
fixer le film conducteur (18) sur le corps de base (32), **caractérisé en ce que** l'élément capteur (12) et la région partielle (30) adjacente à l'évidement (26) sont enrobés avec la masse de coulée (28) et la masse de coulée (28) est au moins partiellement durcie avant que le film conducteur (18) et l'élément capteur (12) enrobé avec la masse de coulée (28) soient agencés sur le corps de base (32).

2. Procédé selon la revendication 1,
dans lequel l'étape consistant à agencer l'élément capteur (12) dans l'évidement (26) du film conducteur (18) comprend une étape consistant à positionner le corps de capteur (14) dans l'évidement (26),
dans lequel le corps de capteur (14) est positionné dans l'évidement (26) de manière à ce qu'une surface extérieure (42) du corps de capteur (14) s'étende dans un plan (50) dans lequel s'étend le film conducteur (18).

3. Procédé selon la revendication 1 ou 2,
dans lequel l'élément capteur (12) est enrobé de manière à ce qu'une surface extérieure (40, 42) du corps de capteur (14) soit agencée plus près d'une surface (44, 46) de la masse de coulée (28) qu'une autre surface extérieure (40, 42) opposée du corps de capteur (14) par rapport à une autre surface (44, 46) opposée de la masse de coulée.

4. Procédé selon la revendication 1,
dans lequel l'étape consistant à agencer l'élément capteur (12) dans l'évidement (26) du film conducteur (18) comprend une étape consistant à positionner le corps de capteur (14) dans l'évidement,
dans lequel le corps de capteur (14) est positionné dans l'évidement (26) de manière à ce que deux plans de capteur (52, 54) parallèles et opposés, dans chacun desquels s'étend une surface extérieure (40, 42) du corps de capteur (14), enserrent un plan (50) dans lequel s'étend le film conducteur (18).

5. Procédé selon l'une des revendications précédentes,
dans lequel l'élément capteur (12) est enrobé de manière à ce que l'élément capteur (12) soit entièrement entouré par la masse de coulée (28).

6. Procédé selon l'une des revendications précédentes,
dans lequel le film conducteur (18) et l'élément capteur (12) sont agencés sur le corps de base (32) de manière à ce que la masse de coulée (28) soit agencée entre le corps de capteur (14) et le corps de base (32).

7. Procédé selon l'une des revendications précédentes,
dans lequel la masse de coulée (28) comprend un matériau thermodurcissable, un matériau thermoplastique, un matériau à base de résine époxy, un matériau contenant de la silicone, un matériau à base de polyuréthanne et/ou un matériau à base d'acrylique.

8. Procédé selon l'une des revendications précédentes,
dans lequel la masse de coulée (28) est durcie par apport de chaleur et/ou par exposition à de la lumière UV.

9. Procédé selon l'une des revendications précédentes,
dans lequel le film conducteur (18) est fixé sur le corps de base (32) au moyen d'un sertissage à chaud et/ou au moyen d'un raccord adhésif.

10. Procédé selon l'une des revendications précédentes, consistant en outre à :
ménager un autre évidement (27) dans une région du film conducteur (18) qui est agencée entre deux pistes conductrices adjacentes (24) qui sont respectivement en contact avec l'un des éléments de contact (16) de l'élément capteur (12), et
dans lequel l'autre évidement (26) est au moins partiellement enrobé de masse de coulée (28).
